# EUROPEAN PATENT SPECIFICATION

(11) **EP 2 280 047 B1**
(45) Date of publication and mention of the grant of the patent: **25.04.2012**
(21) Application number: 09729116.5
(22) Date of filing: 25.03.2009
(51) Int. Cl.: C09D 133/14, C08L 33/14, C08L 61/20, C08L 83/04, C09D 161/20, C09D 183/04, C09J 7/02, C09K 3/00

(54) **RELEASING AGENT COMPOSITION AND RELEASING MATERIAL**
TRENNMITTELZUSAMMENSETZUNG UND TRENNMATERIAL
COMPOSITION D'AGENT ANTIADHÉSIF ET MATÉRIAU ANTIADHÉSIF

(30) Priority: 31.03.2008 JP 2008090875
(43) Date of publication of application: 02.02.2011
(73) Proprietor: Hitachi Kasei Polymer Co., Ltd., Shinjuku-ku Tokyo 163 0449 (JP); LINTEC Corporation, Tokyo 173-0001 (JP)
(72) Inventor: KOIZUMI, Fumio, Tokushima-shi Tokushima 770-0003 (JP); FUJITA, Hiroyuki, Tokushima-shi Tokushima 770-0003 (JP); SASAKI, Yasushi, Tokyo 173-0001 (JP)
(74) Representative: Bassil, Nicholas Charles
(86) International application number: PCT/JP2009/055981
(87) International publication number: WO 2009/122984

(56) References cited:
- EP-A2- 0 409 514
- JP-A- 57 014 642
- JP-A- 58 013 664
- JP-A- 2000 026 759
- JP-A- 2000 095 929
- JP-A- 2006 008 981
- JP-A- 2006 037 069
- JP-A- 2007 137 940
- JP-A- 2008 156 499

## Description

### TECHNICAL FIELD

The present invention relates to a release agent composition and a release material using said release agent composition. Particularly, the present invention relates to a release agent composition which is superior in release property at high temperature, gloss, surface state, and durability for repeated use, and a release material using said release agent composition.

### BACKGROUND ART

Release materials are used for forming the surface of synthetic leather in the production of synthetic leathers. Production of synthetic leather is generally composed of a sequence of steps as described below. Firstly, an one-component type urethane resin is coated on a release material (also, referred to as carrier paper for casting when used in the production of synthetic leather), and is dried by heating. On the surface of the one-component type urethane resin film thus formed, a two-component type urethane resin as an adhesive is coated, and a base fabric is laminated thereto and the laminate is matured. After that, the synthetic leather thus formed is separated from the release material. Since the release material is used repeatedly in this sequence of steps, the material is required to have durability for repeated use. In addition, since most of the one-component type urethane resins and the two-component type urethane resins are used in diluted state with an organic solvent such as methyl ethyl ketone, dimethylformamide, and toluene, the release material is required to have solvent resistance. Further, the material is required to have heat resistance which is sufficiently tolerant to heating in the drying.

Production of synthetic leather is carried out by casting method or the like, and urethane resin, polyvinyl chloride resin, polyamide resin, amino resin, or the like are used in the production. In the production of synthetic leather, a resin composition for carrier paper for casting is used to make the surface of the substrate releasable. As typical examples of the resin composition for carrier paper for casting, polypropylene type, amino-alkyd type, and silicone type resin compositions are known. However, although polypropylene type resin composition can maintain superior release property even when it is repeatedly used, it has such problem that there is a limitation in the use at comparatively high temperature. Further, in the polypropylene type resin composition, there is problems that release side of release materials is easily bruised, and an enamel type (having strong gloss) product cannot be obtained. In addition, amino-alkyd type resin composition has a problem that release property is poor, although it has superior gloss. Silicone type resin composition has superior release property but has a problem that it is not suitable for enamel type products because releaseinferior gloss.

As a means to solve the above problems, patent literature 1 discloses a resin composition for carrier paper for casting comprising a silicone-modified acrylic resin modified with an organopolysiloxane in which 15 to 50 mole % of organic groups bound to silicon atom in a molecule are phenyl groups and at least one of the rest organic groups is an organic group substituted by a hydroxy group, and a polyisocyanate compound. And the literature describes that a carrier paper for casting which is superior in heat resistance and has good gloss as well as excellent release property can be obtained by using the organic group substituted by a hydroxy group.

In addition, patent literature 2 discloses a resin composition for carrier paper for casting comprising a silicone-modified alkyd resin modified with an organopolysiloxane in which 15 to 50 mole % of organic groups bound to silicon atom in a molecule are phenyl groups and at least one of the rest organic groups is an organic group substituted by a hydroxy group, and a polyisocyanate compound. And the literature describes that a carrier paper for casting which is superior in heat resistance and has superior gloss as well as superior release property can be also obtained in the case of the carrier paper for casting using the alkyd resin.

Patent literature 3 discloses a resin composition for carrier paper for casting comprising a silicone-modified acrylic resin modified with an organopolysiloxane in which 15 to 50 mole % of organic groups bound to silicon atom in a molecule are phenyl groups and at least one of the rest organic groups is an organic group substituted by a hydroxy group, an alkanol-modified amino resin, and an acidic catalyst. And the literature describes that a carrier paper for casting which is superior in heat resistance and has superior gloss as well as superior release property can be also obtained in the case of the carrier paper for casting comprising an acrylic resin and an amino resin together due to the acidic catalyst.

Patent literature 4 discloses a resin composition for carrier paper for casting comprising a silicone-modified alkyd resin modified with an organopolysiloxane in which methyl group, phenyl group and organic groups bind to silicon atom, at least one of said organic groups is an organic group substituted by a hydroxyl group, and 15 to 50 mole % of total substituents bound to silicon atom are phenyl groups, an alkanol-modified amino resin, and an acidic catalyst. And the literature describes that a carrier paper for casting which is superior in heat resistance and has superior gloss as well as superior release property can be also obtained in the case of the carrier paper for casting comprising an alkyd resin and an amino resin together due to the acidic catalyst.

However, the resin compositions for the carrier paper for casting disclosed in patent literatures 1 to 4 have a problem that suitable release property cannot be obtained.

As a means to solve this problem, patent literature 5 discloses a resin composition for carrier paper for casting comprising an alkyd resin or an acrylic resin, an organopolysiloxane in which 15 to 50 mole % of organic groups bound to silicon atom in a molecule are phenyl groups, and at least one of the rest organic groups is an organic group substituted by a hydroxy group represented by the chemical formula 3 shown below, an alkanol-modified amino resin, and an acidic catalyst. And the literature describes that the carrier paper for casting obtained from said resin composition for carrier paper for casting is superior in release property, heat resistance, gloss, and has less fluctuation in quality in comparison with the conventional carrier paper for castings.

### [Formula 1]

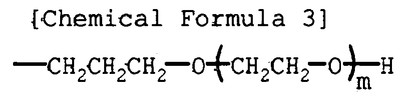

Wherein, m is an average value of 1 to 3.

### LITERATURES FOR PRIOR ART

Patent Literature 1: JP-A-56(1981)-14550;
Patent Literature 2: JP-A-56(1981)-11980;
Patent Literature 3: JP-A-56(1981)-14566 (USP No. 4,320,172);
Patent Literature 4: JP-A-3(1991)-263475;
Patent Literature 5: JP-A-2(1990)-28242;

### DISCLOSURE OF INVENTION

### PROBLEM TO BE SOLVED BY THE INVENTION

However, the release paper coated with the resin composition for carrier paper for casting described in patent literature 5 had a problem that production efficiency for synthetic leather was low, because the release paper gradually lost release property along with repeated production of synthetic leather, and finally became not releasable.

Accordingly, an object of the present invention is to provide a release agent composition which is superior in gloss, release property, and surface state, and can maintain superior release property even in repeated use.

### MEANS FOR SOLVING THE PROBLEM

The present inventors have ascertained that one reason of the declining of release property during the repeated use of the release material is deterioration of the release layer of the release material due to gradual corrosion by an organic solvent as a diluent, in particular, dimethylformamide contained in the urethane resin in the above production steps for synthetic leather.

Therefore, the present inventors intensively studied to solve the above problem. As a result, they have found out that by comprising a hydroxyl-group-containing acrylic resin, in which hydroxyl value is 10 to 150 mg KOH/g, glass transition temperature is 20 to 100°C, and weight average molecular weight is 20,000 to 100,000, in the release agent composition to be used in the release material, the declining of release property can be retarded even in repeated use.

Namely, a release agent composition of the present invention to satisfy the above object is characterized by comprising a hydroxy-group-containing acrylic resin having a repeating unit represented by the chemical formula 1 as shown below, an amino resin, and a silicone resin having a functional group which can chemically bind to at least one of said hydroxyl-group-containing acrylic resin and said amino resin, wherein hydroxyl value of said hydroxyl-group-containing acrylic resin is 10 to 150 mg KOH/g; glass transition temperature of said hydroxy-group-containing acrylic resin is 20 to 100°C; and weight average molecular weight of said hydroxy-group-containing acrylic resin is 20,000 to 100,000;

### [Formula 2]

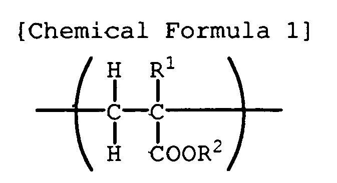

wherein, R¹ is hydrogen atom or methyl group, R² is hydroxyalkyl group having 1 to 20 carbon atoms or a substituent represented by the following Chemical Formula 2:

### [Formula 3]

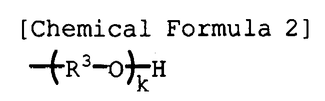

wherein, R³ is a linear or branched alkylene group having 1 to 10 carbon atoms, and k is a real number of 1 to 10.

### EFFECT OF THE INVENTION

According to the present invention, a release agent composition and a release material, which is superior in gloss, release property and surface state, and has superior resistance to an organic solvent as a diluent in the urethane resin to be used in the production of synthetic leather, in particular, dimethylformamide, and also can maintain superior release property even in repeated use, can be provided.

### MODES FOR CARRING OUT THE INVENTION

Hereinafter, preferable aspects of the present invention will be explained. However, technical scope of the present invention should be defined based on the descriptions in claims, and is not limited only to the following aspects.

The release agent composition in the present aspect comprises a hydroxyl-group-containing acrylic resin having a repeating unit represented by the following chemical formula 1:

### [Formula 4]

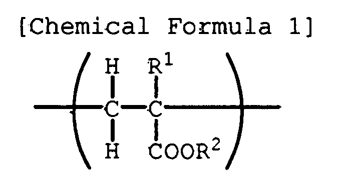

wherein, R¹ is hydrogen atom or methyl group, R² is hydroxyalkyl group having 1 to 20 carbon atoms or a substituent represented by the following chemical formula 2:

### [Formula 5]

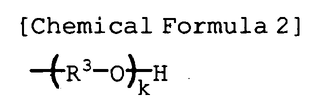

wherein, R³ is a linear or branched alkylene group having 1 to 10 carbon atoms, k is a real number of 1 to 10.

In the above chemical formula 1, specific example of hydroxyalkyl group having 1 to 20 carbon atoms of R² includes hydroxymethyl group, hydroxyethyl group, hydroxypropyl group, hydroxyisopropyl group, hydroxybutyl group, hydroxypentyl group, hydroxyoctyl group, and the like.

In the above chemical formula 2, specific example of linear alkylene group having 1 to 10 carbon atoms of R³ includes methylene group, ethylene group, n-propylene group, n-butylene group, n-pentylene group, n-hexylene group, n-heptylene group, n-octylene group, and the like. In addition, specific example of branched alkylene group includes isopropylene group, isobutylene group, and the like.

Specific example of monomer from which the repeating unit represented by the above chemical formula 1 is derived (hereinafter, also referred to as "monomer A") includes 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, polyethylene glycol acrylate, polyethylene glycol methacrylate, polypropylene glycol acrylate, polypropylene glycol methacrylate, and the like.

In the release agent composition in the present aspect, the hydroxy group contained in the repeating unit represented by the above chemical formula 1 can be a reactive group in the cross-linking reaction between the hydroxyl-group-containing acrylic resin and the amino resin or the silicone resin.

The monomer constructing the hydroxyl-group-containing acrylic resin according to the present aspect comprises, in addition to monomer A, preferably at least one kind of, and more preferably two kinds or more of compounds having a vinyl group which is copolymerizable with monomer A (hereinafter, also referred to "monomer B", provided that monomer A is excluded). In the hydroxyl-group-containing acrylic resin according to the present aspect, monomer B has a role mainly to adjust the glass transition temperature. By comprising two kinds or more of monomer B, maintenance of heat resistance and adjusting resin hardness of the hydroxyl-group-containing acrylic resin become easy.

Monomer B is a compound having a vinyl group which is copolymerizable with monomer A, and kind thereof is not particularly limited, so long as the compound is within a range where the function effect of the present invention can be exhibited. Specific example of monomer B includes methyl acrylate, methyl methacrylate, ethyl acrylate, ethyl methacrylate, n-butyl acrylate, n-butyl methacrylate, isobutyl acrylate, isobutyl methacrylate, 2-ethylhexyl acrylate, 2-ethylhexyl methacrylate, lauryl acrylate, lauryl methacrylate, glycidyl methacrylate, cyclohexyl acrylate, cyclohexyl methacrylate, acrylic acid, methacrylic acid, styrene, vinyltoluene, α-methylstyrene, (meth)acrylonitrile, (meth)acrylamide, ethylene, propylene, butylene, vinyl chloride, vinylidene chloride, vinyl fluoride, vinyl acetate, vinyl propionate, vinyl methyl ether, vinyl ethyl ether, vinyl methyl ketone, methyl isopropenyl ketone, 2-vinylpyridine, 4-vinylpyridine, N-vinylpyrrolidone, and the like.

Among total repeating units constructing the hydroxyl-group-containing acrylic resin according to the present aspect, a ratio of a repeating unit derived from monomer A may be adjusted accordingly by those skilled in the art so as to satisfy hydroxyl value, glass transition temperature, and weight average molecular weight of the hydroxyl-group-containing acrylic resin described later, and preferably 2 to 60 mole %, more preferably 2 to 40 mole %, and further more preferably 5 to 40 mole %. When ratio of the repeating unit derived from monomer A to total repeating units constructing the hydroxyl-group-containing acrylic resin is in the above range, reactivity to the amino resin becomes superior.

Hydroxyl value of the hydroxyl-group-containing acrylic resin is 10 to 150 mg KOH/g, and preferably 30 to 150 mg KOH/g. When hydroxyl value is less than 10 mg KOH/g, cross-linking reaction with amino resin or silicone resin becomes incomplete, and sufficient resistance to dimethylformamide may not be obtained, and therefore the material is not suitable for repeated use. On the contrary, hydroxyl value more than 150 mg KOH/g is not preferable, because synthesis of acrylic resin becomes difficult. In this connection, in the present aspect, a value measured according to the neutralization titration method (JIS-K0070) is employed for hydroxyl value of acrylic resin.

Glass transition temperature of the hydroxyl-group-containing acrylic resin is 20 to 100°C, and preferably 30 to 80°C. When grass transition temperature is lower than 20°C, deterioration of the release layer becomes significant due to thermal history based on repeated use, therefore, frequency of repeatedly usable cycle may be reduced. On the contrary, when grass transition temperature is higher than 100°C, release layer becomes hard and brittle, and therefore, release property may be deteriorated. In this connection, in the present aspect, a value measured using Differential Scanning Calorimetry (DSC) is employed for grass transition temperature.

Weight average molecular weight of the hydroxyl-group-containing acrylic resin is 20,000 to 100,000, and preferably 20,000 to 70,000. When weight average molecular weight is less than 20,000, resistance to dimethylformamide becomes weaker, and frequency of repeatedly usable cycle may be reduced. On the contrary, when weight average molecular weight is more than 100,000, coating on the substrate becomes difficult due to high viscosity, and therefore, superior surface state may not be obtained. In this connection, in the present aspect, a value measured by gel permeation chromatography (GPC method)(converted to polystyrene) is employed for weight average molecular weight.

Synthesis of the hydroxyl-group-containing acrylic resin according to the present aspect can be carried out by polymerizing monomers including monomer A using the solution polymerization method with a catalyst such as benzoyl peroxide, azobisisobutyronitrile,or the like in an organic solvent such as ethyl acetate, butyl acetate, methyl ethyl ketone, methyl isobutyl ketone, xylene, and toluene.

The release agent composition of the present aspect comprises an amino resin. "Amino resin" used herein means a resin obtained by condensation reaction between a compound containing amino group and an aldehyde. Amino resin includes aniline-aldehyde resin, urea resin, and melamine resin, and any type of the above amino resins may be used in the present aspect. In addition, the amino resin in the present aspect may be commercially available one, or synthesized by conventionally known method.

Among these amino resins, specifically, various types of amino resins synthesized using a prepolymer having methylol or ether thereof as raw resin, can be used. More specifically, at least 1 type of amino resin selected from the group consisting of methylated melamine resin, butylated melamine resin, methylated urea resin, butylated urea resin, methylated benzoguanamine resin, and butylated benzoguanamine resin can be used.

The release agent composition of the present aspect comprises a silicone resin. "Silicone resin" used herein means organopolysiloxane having three dimensional network structure containing dimethylpolysiloxane as a main component, silicone rubber, and silicone oil. Silicone resin to be used in the present aspect may be commercially available one, or synthesized by conventionally known method.

As the silicone resin, organopolysiloxane is preferable. Organopolysiloxane to be used in the release agent composition of the present aspect may be any type of linear or branched structure, so long as the material is within a range where the function effect of the present invention can be exhibited, and the one having superior compatibility with the above-described hydroxyl-group-containing acrylic resin and the amino resin is suitably used. Further, properties of organopolysiloxane such as flexibility, elasticity, and the like can be altered by varying molar ratio of an organic group to silicon atom.

Based on the total number of organic groups bound to silicon atom in a molecule of organopolysiloxane as 100%, ratio of phenyl group is preferably 15 to 50%, and more preferably 15 to 40%. When ratio of phenyl group is 15% or more, compatibility with acrylic resin, alkyd resin, and amino resin becomes superior. In addition, when ratio of phenyl group is 50% or less, deterioration of release property in the release material can be retarded.

As such organopolysiloxane, specifically, organopolysiloxane represented by the following chemical formula 4 is more preferable.

### [Formula 6]

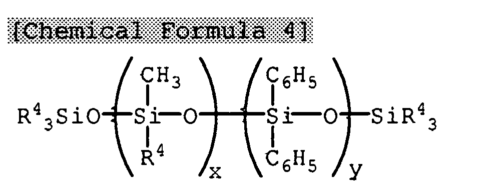

wherein, at least one of R⁴ is a functional group which can be chemically bind to at least one of the hydroxy-group-containing acrylic resin or the amino resin, and each of the rest groups is independently substituted or non-substituted alkyl group. x is an integer of 15 to 500, y is an integer of 15 to 500, provided that a relationship of 0.15≦y/(x+y) ≦0.5 is satisfied.

In the above chemical formula 4, x is an integer of 15 to 500, and preferably an integer of 25 to 100. When x is an integer of 15 to 500, release property is superior. In addition, y is an integer of 15 to 500, and preferably an integer of 25 to 100. When y is an integer of 15 to 500, compatibility with acrylic resin and amino resin is superior. Further, when a relationship of 0.15≦y/ (x+y) ≦0.5 is satisfied, organopolysiloxane having stabilized degree of polymerization can be obtained.

In order to obtain sufficient levels of various performances of the release material such as durability for repeated use, release property, gloss, and the like, at least one of the rest of organic groups other than the above phenyl group is preferably a functional group which can chemically bind to at least one kind of resin selected from the group consisting of the hydroxyl-group-containing acrylic resin and the amino resin. The functional group which can chemically bind to at least one kind of resin selected from the group consisting of the hydroxyl-group-containing acrylic resin and the amino resin includes hydroxyl-group-containing organic group, amino-group-containing organic group, carboxyl-group-containing organic group, and glycidyl-group-containing organic group, and the like. Among them, hydroxyl-group-containing organic group is preferable from the point of easy bonding reaction between hydroxyl-group-containing acrylic resin or amino resin and silicone resin.

Among the above functional groups, when organopolysiloxane has a hydroxyl-group-containing organic group, number of said hydroxyl-group-containing organic group per one molecule of silicone resin is preferably 1 to 20, and more preferably 1 to 10. More specific example of such hydroxyl-group-containing organic group includes organic groups represented by the following chemical formula 5 and chemical formula 6:

### [Formula 7]

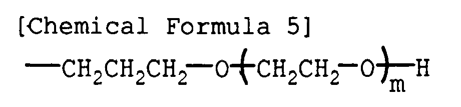

wherein, m is an average number of repeating unit, and a real number of 1 to 3;

### [Formula 8]

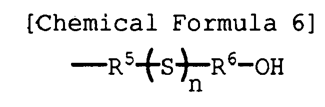

wherein, each of R⁵ and R⁶ is independently linear alkylene group having 1 to 10 carbon atoms, n is 0 or 1.

Thus, when orgnopolysiloxane has a functional group which can chemically bind to at least one of hydroxyl-group-containing acrylic resin and amino resin, a structure in which hydroxyl-group-containing acrylic resin or amino resin and silicone resin chemically bind together in the release layer can be obtained. Due to this structure, migration of silicone into synthetic leather layer can be inhibited in the production of synthetic leather, and durability for repeated use can be improved.

The rest of non-substituted or substituted alkyl group other than the above organic group has preferably 1 to 12 carbon atoms, and more preferably 1 to 8 carbon atoms. Non-substituted alkyl group specifically includes methyl group, ethyl group, propyl group, isopropyl group, butyl group, sec-butyl group, tert-butyl group, octyl group, and the like. Substituted alkyl group includes alkyl group in which a part or all of hydrogen atoms bound to carbon atom of the above non-substituted alkyl group are substituted by a halogen atom such as fluorine, chlorine, and iodine atom, or cyano group. More specifically, substituted alkyl group includes chloromethyl group, trifluoropropyl group, cyanoethyl group, and the like. Among non-substituted alkyl group and substituted alkyl group, methyl group is further preferable from the viewpoint that higher levels of release property, heat resistance, and gloss can be obtained.

As a synthesis method for the above silicone resin, for example, hydrolysis of organohalogensilane or organoalkoxysilane can be used. Specifically, the following methods can be used: a method in which monomethyltrichlorosilane and dimethyldichlorosilane are hydrolyzed together in a solvent; and a method in which cyclic siloxane obtained by hydrolyzing only dimethyldichlorosilane is heated after adding an acid or an alkali as a catalyst; and so on. More specifically, the silicone resin can be obtained, for example, by a method in which a cyclic organopolysiloxane having diphenylsiloxane group and an organosilane having a desired hydroxyl-group-containing organic group forming a terminal group are charged in such a compounding ratio that the desired product can be obtained, and polymerized in the presence of alkali such as KOH, CsOH, or the like.

Next, composition ratio of the hydroxyl-group-containing acrylic resin, amino resin, and silicone resin in the release agent composition of the present aspect will be explained. Composition ratio in the present aspect is represented by a ratio of solid content of each resin based on the total solid content of standard resin.

Solid content ratio of the hydroxyl-group-containing acrylic resin in the release agent composition of the present aspect is preferably 20 to 90 parts by mass, more preferably 30 to 80 parts by mass, and further preferably 50 to 80 parts by mass based on the total solid content of hydroxyl-group-containing acrylic resin and amino resin as 100 parts by mass. Solid content ratio of amino resin is preferably 10 to 80 parts by mass, more preferably 20 to 70 parts by mass, and further preferably 20 to 50 parts by mass, based on the total solid content of hydroxyl-group-containing acrylic resin and amino resin as 100 parts by mass. When composition ratio of the hydroxyl-group-containing acrylic resin is 20 parts by mass or more, resistance to dimethylformamide can be obtained, and decrease in frequency of repeatedly usable cycle can be retarded. In addition, when composition ratio of the hydroxyl-group-containing acrylic resin is 90 parts by mass or less, that is, when composition ratio of the amino resin is 10 parts by mass or more, a sufficient cross-linking structure can be obtained in the release layer. Due to this, resistance to dimethylformamide can be obtained, and deterioration of release property and decrease in frequency of repeatedly usable cycle can be retarded. Composition ratio of the amino resin is 80 parts by mass or less, release layer becomes flexible, and hence release property is improved.

In addition, solid content of the silicone resin in the release agent composition of the present aspect is preferably 1 to 20 parts by mass, more preferably 1 to 15 parts by mass, and further preferably 2 to 10 parts by mass, based on the total solid content of the hydroxyl-group-containing acrylic resin and the amino resin as 100 parts by mass. When composition ratio of the silicone resin is 1 part by mass or more, release property is superior. Further, when composition ratio of the silicone resin is 20 parts by mass or less, curability is improved, and hence migration of the silicone resin and gloss can be retarded.

The release agent composition of the present aspect can further comprise an alkyd resin. "Alkyd resin" as used herein means a resin obtained by condensation reaction of polyhydric alcohol and polybasic acid. Alkyd resin is classified to nonconvertible alkyd resin modified with condensed compound of dibasic acid and divalent alcohol or nondrying oil fatty acid, and convertible alkyd resin which is condensed compound of dibasic acid and trivalent or more alcohol, and in the present aspect, any type of the above alkyd resins can be used. In addition, the alkyd resin in the present aspect may be commercially available one, or synthesized according to the conventionally known method.

In the monomers forming the alkyd resin, specific example of polyhydric alcohol includes dihyric alcohol such as ethylene glycol, diethylene glycol, triethylene glycol, propylene glycol, trimethylene glycol, tetramethylene glycol and neopentyl glycol; trihyric alcohol such as glycerin, trimethylol ethane, and trimethylol propane; diglycerin, triglycerin, pentaerythritol, pentaerythrit, dipentaerythrit, mannit, solbit, and the like.

In the monomers forming the alkyd resin, specific example of polybasic acid includes saturated polybasic acid such as phthalic anhydride, terephthalic acid, succinic acid, adipic acid, sebacic acid, and the like; unsaturated polybasic acid such as maleic acid, maleic anhydride, fumaric acid, itaconic acid, citraconic anhydride, isophthalic acid, trimellitic anhydride, and the like; polybasic acid by Diels-Alder reaction such as an adduct of cyclopentadiene - maleic anhydride, an adduct of terpene - maleic anhydride, an adduct of rosin - maleic anhydride, and the like. Further, in addition to the above polybasic acid, benzoic acid which is a monobasic acid may be used in combination.

Specific example of modifying agent includes palm oil, flaxseed oil, china wood oil, castor oil, dehydrated castor oil, and fatty acid thereof, octylic acid, lauric acid, palmitic acid, stearic acid, oleic acid, linoleic acid, linolenic acid, eleostearic acid, recinoleic acid, dehydrated recinoleic acid, and the like.

Oil length of the alkyd resin is preferably more than 0% and 60% or less, more preferably 20 to 40%. When oil length is within the above range, fast hardenability is improved, alkyd resin having superior gloss and higher hardness can be obtained.

Acid value of the alkyd resin is preferably 1 to 30 mg KOH/g, and more preferably 5 to 25 mg KOH/g. When acid value is within the above range, fast hardenability, coating property, and chemical resistance become superior.

Hydroxyl value of the alkyd resin is preferably 50 to 300 mg KOH/g, and more preferably 100 to 250 mg KOH/g. When hydroxyl value is within the above range, reactivity with amino resin is well-balanced, and also, heat resistance and chemical resistance are superior.

In addition, the alkyd resin may be modified with or mixed with epoxy resin, phenol resin, or the like to be used.

In this connection, synthesis method of the above alkyd resin includes, for example, a method in which polyvalent alcohol, polybasic acid, and if necessary, modifying agent are heated and condensed.

Composition ratio of the alkyd resin in the release agent composition of the present aspect is preferably more than 0 part by mass and 50 parts by mass or less, more preferably 5 to 40 parts by mass, and further preferably 10 to 30 parts by mass, based on the total solid content of the hydroxyl-group-containing acrylic resin and the amino resin as 100 parts by mass. The alkyd resin can be used without losing resistance to dimethylformamide when composition ratio thereof is within the above range.

The release agent composition of the present aspect can be obtained by mixing or reacting each of the above resins. This release agent composition is usually prepared as an organic solvent solution due to convenience in use. As an organic solvent to be used in this case, known solvents which have superior solubility for each resin component and no reactivity with each resin component, can be used. Specifically, at least one kind of solvent selected from the group consisting of toluene, xylene, methanol, ethanol, isobutanol, n-butanol, methyl ethyl ketone, acetone, and tetrahydrofuran, can be preferably used. Amount of these solvents to be used is preferably such amount that solid content of resin falls in a range of 10 to 60 % by mass. In addition, the release agent composition of the present aspect may comprise other additives within a range where functional effect of the present aspect can be achieved. As an additive, by compounding, for example, known delustering agent such as titanium oxide particle or the like, matte type of the release agent composition can be prepared.

In addition, the release agent composition of the present aspect may comprise an acidic catalyst. This acidic catalyst serves as catalytic action for cross-linking reaction when the release agent composition is hardened and dried. As the acidic catalyst, specifically, a known acid such as p-toluenesulfonic acid, hydrochloric acid which is conventionally used when hydroxyl-group-containing acrylic resin or alkyd resin and amino resin is cross-linked, can be used.

Next, the release material of the present aspect will be explained.

The release material of the present aspect is obtained by coating the above release agent composition on the surface of a substrate.

The substrate specifically includes film substrate such as polyethylene terephthalate film, polyethylene naphthalate film, and the like; and paper substrate such as wood free paper, wood-containing paper, art paper, cast-coated paper, coated paper, and the like.

When paper substrate is used as a substrate, in order to coat the release agent composition on the surface of release material uniformly, a paper substrate which is extrusion-coated with polyethylene, polypropylene or olefin resin at least on the surface to be coated with the release agent, or the one which is coated with a commonly used filler (barrier agent) such as polyvinyl alcohol, starch, acrylic resin, clay/binder, and the like, is preferable.

Solid content of the release agent composition to be coated on the release material is preferably 0.01 to 50 g/m², and more preferably 0.1 to 15 g/m².

Film thickness of the release agent composition to be coated on the release material after drying is preferably 0.1 to 15 µm.

As for a method for producing the release material, conventionally known method can be employed accordingly by those skilled in the art.

As a method to coat the release agent composition of the present aspect on the substrate, a method of using coating machine such as roll coater, blade coater, air-knife coater, gate roll coater, bar coater, gravure coater, or the like is preferable.

As a drying method for the release agent composition coated on the substrate, a thermal drying method using hot air drying oven and the like are used. Drying temperature is generally 100 to 200°C, but a temperature outside of this range maybe naturally used.

Further, the release agent composition of the present aspect may naturally be used in an application other than the above-described "production process for synthetic leather". For example, the release agent composition of the present aspect can be applied to the conventionally known pressure-sensitive adhesive products such as release paper and exfoliate paper for pressure-sensitive adhesive paper, and pressure-sensitive adhesive film. Specifically, the release agent composition according to the present aspect can be applied to a product such as pressure-sensitive adhesive tape coated with the release agent composition of the present aspect on one side or both sides of polyethylene terephthalate film or the like.

### EXAMPLES

Functional effects of the present invention will be explained using the following Examples and Comparative Examples.

In the following Examples and Comparative Examples, firstly, hydroxyl-group-containing acrylic resins having different hydroxyl value, glass transition temperature, and weight average molecular weight each other were synthesized. After that, using the thus synthesized hydroxyl-containing-acrylic resins, release agent compositions having different composition ratios of the hydroxyl-containing-acrylic resin, amino resin, silicone resin, and alkyd resin were prepared. Further, release materials were produced using these release agent compositions, and for these release materials, performances such as gloss, surface state, initial release property, durability for repeated use and resistance to dimethylformamide were evaluated.

### (Synthesis of Acrylic Resin)

### [Synthesis Example 1]

In a reactor equipped with stirrer and cooling tube, butyl acetate (600 parts by mass) was charged, and maintained at 100°C while heated with stirring under nitrogen gas blow. Subsequently, n-butyl acrylate (150 parts by mass), 2-hydroxyethyl methacrylate (250 parts by mass), methyl methacrylate (100 parts by mass), styrene (500 parts by mass), and azobisisobutyronitrile were charged in another vessel, and mixed homogeneously to prepare a monomer-catalyst mixed solution. This monomer-catalyst mixed solution was added in drops to the above-described reaction vessel over 2 hours at a constant rate. After temperature was maintained for 3 hours, heating residue was measured (JIS-K5407) to confirm degree of polymerization being 100%. After that, the reaction mixture was diluted by adding butyl acetate (400 parts by mass) to obtain acrylic resin (A) having 50% of resin concentration. Hydroxyl value was 105 mg KOH/g (converted to resin content 100%), glass transition temperature was 55°C, and weight average molecular weight was 35,000 for this acrylic rein. In this connection, hydroxyl value was measured by the neutralization titration method (JIS-K0070). Glass transition temperature was measured using differential scanning calorimeter measurement system (DSC-60, produced by Shimadzu Corp.). Weight average molecular weight was measured by the GPC method (converted to polystyrene) . Measurement of weight average molecular weight was carried out using the following instruments and conditions. Namely, as measuring instruments, column oven (L-5030, produced by Hitachi, Ltd.), column (GL-A130-S, GL-A150-S, and GL-A160-S, produced by Hitachi, Ltd.), and RI detector (L-7490, produced by Hitachi, Ltd.) were used. Measuring conditions were as follows: column temperature was set at 35°C (setup temperature of column oven), and flow rate (setup flow rate of pump) was set at 1ml/min.

### [Synthesis Example 2]

Acrylic resin (B) was obtained by conducting solution polymerization using the same method as in the above-described Synthesis Example 1, except that monomer mixing ratio in the monomer-catalyst mixed solution was changed to n-butyl acrylate (250 parts by mass), 2-hydroxyethyl methacrylate (160 parts by mass), methyl methacrylate (230 parts by mass), styrene (350 parts by mass), and methaclic acid (10 parts by mass). Hydroxyl value was 69 mg KOH/g, grass transition temperature was 40°C, weight average molecular weight was 49,000, for acrylic resin (B).

### [Synthesis Example 3]

Acrylic resin (C) was obtained by conducting solution polymerization using the same method as in the above-described Synthesis Example 1, except that monomer mixing ratio in the monomer-catalyst mixed solution was changed to n-butyl acrylate (200 parts by mass), 2-hydroxyethyl methacrylate (20 parts by mass), methyl methacrylate (280 parts by mass), and styrene (500 parts by mass). Hydroxyl value was 9 mg KOH/g, grass transition temperature was 54°C, and weight average molecular weight was 31,000 for acrylic resin (C).

### [Synthesis Example 4]

Acrylic resin (D) was obtained by conducting solution polymerization using the same method as in the above-described Synthesis Example 1, except that monomer mixing ratio in the monomer-catalyst mixed solution was changed to 2-ethylhexyl acrylate (300 parts by mass), 2-hydroxyethyl acrylate (200 parts by mass), n-butyl methacrylate (200 parts by mass), and styrene (300 parts by mass). Hydroxyl value was 97 mg KOH/g, grass transition temperature was -14°C, and weight average molecular weight was 30,000 for acrylic resin (D).

### [Synthesis Example 5]

Acrylic resin (E) was obtained by conducting solution polymerization using the same method as in the above-described Synthesis Example 1, except that monomer mixing ratio in the monomer-catalyst mixing solution was changed to 2-hydroxyethyl acrylate (150 parts by mass), isopropyl methacrylate (650 parts by mass), n-butyl methacrylate (200 parts by mass). Hydroxyl value was 73 mg KOH/g, grass transition temperature was 50°C, and weight average molecular weight was 11,000 for acrylic resin (E).

### (Preparation of release material)

### [Example 1]

Acrylic resin (A) obtained in Synthesis Example 1 (50 parts by mass); hydroxyl-group-containing methylphenylsilicone (KNS902, produced by Shin-Etsu Chemical CO.,Ltd.) (5 parts by mass); butylated benzoguanamine resin (TESAZIN 3070-70, produced by Hitachi Kasei Polymer Industries Co., Ltd.) (25 parts by mass) ; methylated melamine resin (Cymel 350, produced by Nihon Cytec Industries Inc.) (20 parts by mass); and 50% by mass methanol solution of p-toluenesulfonic acid (5 parts by mass) were added, and the mixture was diluted with toluene so that solid content became 40% by mass, to obtain a release agent composition.

Next, this release agent composition was coated on a coat paper (cast coated paper, produced by Nippon paper Industries Co., Ltd.; basis weight: 150 g/m²) using a bar coater so that film thickness became 10µm, and hardened by heating at 170°C for 1 minute in a hot air drier, to prepare a release material.

### [Example 2]

Acrylic resin (A) obtained in Synthesis Example 1 (30 parts by mass); castor-oil-modified alkyd resin (Teslac 2002-60, produced by Hitachi Kasei Polymer Industries Co., Ltd.) (30 parts by mass); hydroxyl-group-containing methylphenylsilicone (KNS 902, produced by Shin-Etsu Chemical Co., Ltd.) (5 parts by mass) ; butylated benzoguanamine resin (Tesadin 3070-70, produced by Hitachi Kasei Polymer Industries Co., Ltd.) (15 parts by mass) ; methylated melamine resin (Cymel 350, produced by Nihon Cytec Industries Co., Ltd) (20 parts by mass) ; and 50% by mass methanol solution of p-toluenesulfonic acid (5 parts by mass) were added, and this mixture was diluted with toluene so that solid content became 40% by mass, to obtain a release agent composition.

Next, this release agent composition was coated on a coat paper (cast coated paper, Produced by Nippon paper Industries Co., Ltd.; basis weight: 150 g/m²) using a bar coater so that film thickness became 10µm, and hardened by heating at 170°C for 1 minute in a hot air drier, to prepare a release material.

### [Example 3]

Acrylic resin (B) obtained in Synthesis Example 2 (50 parts by mass); hydroxyl-group-containig methylphenylsilicone (KNS 902, produced by Shin-Etsu Chemical Co., Ltd.) (5 parts by mass) ; butylated benzoguanamine resin (Tesadin 3070-70, produced by Hitachi Kasei Polymer Industries Co., Ltd.) (25 parts by mass) ; methylated melamine resin (Cymel 350, produced by Nihon Cytec Industries Co., Ltd) (20 parts by mass) ; and 50% by mass methanol solution of p-toluenesulfonic acid (5 parts by mass) were added, and this mixture was diluted with toluene so that solid content became 40% by mass, to obtain a release agent composition.

Next, this release agent composition was coated on a coat paper (cast coated paper, produced by Nippon paper Industries Co., Ltd.; basis weight: 150 g/m²) using a bar coater so that film thickness became 10µm, and hardened by heating at 170°C for 1 minute in a hot air drier, to prepare a release material.

### [Comparative Example 1]

Acrylic resin (C) obtained in Synthesis Example 3 (50 parts by mass); hydroxyl-group-containing methylphenylsilicone (KNS 902, produced by Shin-Etsu Chemical Co., Ltd.) (5 parts by mass) ; butylated benzoguanamine resin (Tesadin 3070-70, produced by Hitachi Kasei Polymer Industries Co., Ltd.) (25 parts by mass) ; methylated melamine resin (Cymel 350, produced by Nihon Cytec Industries Co. , Ltd.) (20 parts by mass) ; and 50% by mass methanol solution of p-toluenesulfonic acid (5 parts by mass) were added, and this mixture was diluted with toluene so that solid content became 40% by mass, to obtain a release agent composition.

Next, this release agent composition was coated on a coat paper (cast coated paper, produced by Nippon paper Industries Co., Ltd.; basis weight: 150 g/m²) using a bar coater so that film thickness became 10µm, and hardened by heating at 170°C for 1 minute in a hot air drier, to prepare a release material.

### [Comparative Example 2]

Acrylic resin (D) obtained in Synthesis Example 4 (50 parts by mass); hydroxyl-group-containing methylphenylsilicone (KNS 902, produced by Shin-Etsu Chemical Co., Ltd.) (5 parts by mass) ; butylated benzoguanamine resin (Tesadin 3070-70, produced by Hitachi Kasei Polymer Industries Co., Ltd.) (25 parts by mass) ; methylated melamine resin (Cyme1350 manufactured by Nihon Cytec Industries Co., Ltd) (20 parts by mass) ; and 50% by mass methanol solution of p-toluenesulfonic acid (5 parts by mass) were added, and this mixture was diluted with toluene so that solid content became 40% by mass, to obtain a release agent composition.

Next, this release agent composition was coated on a coat paper (cast coated paper, produced by Nippon paper Industries Co., Ltd.; basis weight: 150 g/m²) using a bar coater so that film thickness became 10µm, and hardened by heating at 170°C for 1 minute in a hot air drier, to prepare a release material.

### [Comparative Example 3]

Acrylic resin (E) obtained in Synthesis Example 5 (50 parts by mass); hydroxyl-group-containing methylphenylsilicone (KNS 902, produced by Shin-Etsu Chemical Co., Ltd.) (5 parts by mass) ; butylated benzoguanamine resin (Tesadin 3070-70, produced by Hitachi Kasei Polymer Industries Co., Ltd.) (25 parts by mass) ; methylated melamine resin (Cymel 350, produced by Nihon Cytec Industries Co., Ltd) (20 parts by mass) ; and 50% by mass methanol solution of p-toluenesulfonic acid (5 parts by mass) were added, and this mixture was diluted with toluene so that solid content became 40% by mass, to obtain a release agent composition.

Next, this release agent composition was coated on a coat paper (cast coated paper, produced by Nippon paper Industries Co., Ltd.; basis weight: 150 g/m²) using a bar coater so that film thickness became 10µm, and hardened by heating at 170°C for 1 minute in a hot air drier, to prepare a release material.

### [Comparative Example 4]

Castor-oil-modified alkyd resin (Teslac 2002-60, produced by Hitachi Kasei Polymer Industries Co., Ltd.) (60 parts by mass) ; hydroxyl-group-containing methylphenylsilicone (KNS 902, produced by Shin-Etsu Chemical Co., Ltd.) (5 parts by mass); methylated melamine resin (Cymel 350, produced by Nihon Cytec Industries Co., Ltd) (35 parts by mass); and 50% by mass methanol solution of p-toluenesulfonic acid (5 parts by mass) were added, and this mixture was diluted with toluene so that solid content became 40% by mass, to obtain a release agent composition.

Next, this release agent composition was coated on a coat paper (cast coated paper, produced by Nippon paper Industries Co., Ltd.; basis weight: 150 g/m²) using a bar coater so that film thickness became 10µm, and hardened by heating at 170°C for 1 minute in a hot air drier, to prepare a release material.

### (Evaluations on Performances of Release Materials)

Evaluations on performances of the release materials were carried out according to the following methods.

### <Degree of Gloss>

Degree of gloss was measured at 60° to the surface of release material, using a gloss meter (GM-3D type, manufactured by Murakami Color Research Laboratory Co., Ltd.).

### <Surface State>

For each release material, presence of repelling or unevenness in the coated film was evaluated by visual evaluation. A release material in which presence of repelling or unevenness in the coated film was not identified was ranked as "Good", and a release material in which presence of repelling or unevenness in the coated film was identified was ranked as "No Good".

### <Initial Peel strength>

An one-component type polyurethane solution (Crisvon (registered trade mark) 5516S, produced by DIC corp.) was coated on the surface of a release material using an applicator so that film thickness after drying became 20 µm, and dried at 130°C for 2 minutes in a hot air drier. After that, a pressure-sensitive adhesive polyester tape (No.31B, produced by Nitto Denko Corp.) was laminated on the polyurethane film surface to reinforce the urethane film. This laminate was cut out to a size of 30cm × 3cm, and peel strength of the release material was measured according to JIS-Z0237 with sample width of 3 cm. Peel strength was measured at a peel angle of 180° in the polyurethane side, and expressed in an unit of mN/3cm.

### <Durability for Repeated Use>

An one-component type polyurethane solution (Crisvon (registered trade mark) 5516S, produced by DIC corp.) was coated on the surface of a release material using an applicator so that film thickness became 20 µm, and dried at 130°C for 2 minutes in a hot air drier. Furthermore, a mixture of a two-component type polyurethane solution for thermosetting adhesive (Crisvon (registered trade mark) 4010, produced by DIC corp.) (100 parts by mass) and an isocyanate type hardener (Burnock (registered trade mark) DN-950, produced by DIC corp.) (10 parts by mass) was coated on the surface of the one-component polyurethane film using an applicator so that film thickness became 30µm, to wet-laminate the base fabric. This wet-laminate was dried by heating at 130°C for 5 minutes, and then left at 40°C for 24 hours. After that, the laminate was left under a 50% RH atmosphere at 23°C for 30 minutes, and then the base fabric was peeled off by hand at a peel angle of about 90°. The above-described series of procedures were repeated until release layer of the release material had been peeled off and the peeling procedure could not be done any more. Frequency of cycle of these series of procedures was used as the frequency of repeatedly usable cycle.

### <Resistance to Dimethylformamide>

Gauzes of 2cm × 2cm stacked in 4 pieces were placed on the surface of a release material, and dimethylformamide (about 0.3 g) was added in drops thereon. The gauzes were covered with a petri dish, and left at rest for 10 minutes, 20 minutes, or 30 minutes. After leaving at rest, petri dish and gauzes were removed, dimethylformamide remained on the surface of the release material was wiped off with a gauze. After a cellophane adhesive tape was pressure-bonded onto the surface of the release material and immediately peeled off, a surface state of the release layer of the release material was evaluated. Evaluation was carried out by visual evaluation, and when no change was found in the surface state of the release layer between before the pressure-bonding of the cellophane adhesive tape and after peeling off from the cellophane adhesive tape, the release material was ranked as "Good". After peeling off from the cellophane adhesive tape, when a part of the release agent (more than 0% and less than 90% of the total surface area of the release layer) transferred to the surface of the cellophane adhesive tape together with the substrate under the release layer, the release material was ranked as "Slightly No Good". After peeling off from the cellophane adhesive tape, when release agent of 90% or more of the total surface of the release layer transferred to the surface of the cellophane adhesive tape together with the substrate, the release material was ranked as "No Good". Evaluation results of the release materials prepared in Examples 1 to 3 and Comparative Examples 1 to 4 are shown in Table 1.

**[Table 1]**

| | Degree of Gloss (%) | Surface State | Peel Strength (mN/3cm) | Frequency of Repeatedly Usable Cycle | Resistance to Dimethylformamide | | |
|---|---|---|---|---|---|---|---|
| | | | | | After 10 min. | After 20 min. | After 30 min. |
| Example 1 | 99 | ○ | 150 | 10 or more | ○ | ○ | ○ |
| Example 2 | 99 | ○ | 120 | 8 | ○ | ○ | Δ |
| Example 3 | 98 | ○ | 150 | 10 or more | ○ | ○ | ○ |
| Comparative Example 1 | 99 | ○ | 800 | 0 | × | × | × |
| Comparative Example 2 | 98 | ○ | 120 | 4 | Δ | × | × |
| Comparative Example 3 | 98 | ○ | 120 | 5 | ○ | Δ | × |
| Comparative Example 4 | 97 | ○ | 130 | 5 | × | × | × |

| | | | | | | | |
|---|---|---|---|---|---|---|---|
| Note: in surface state and resistance to dimethylforamide, "Good" is shown by ○, "Slightly No Good" is shown by Δ, and "No Good" is shown by ×. | | | | | | | |

From table 1, it was shown that the release agent composition of the present invention was superior in resistance to dimethylformamide and also durability for repeated use.

## Claims

1. A release agent composition comprising a hydroxy-group-containing acrylic resin having a repeating unit represented by the chemical formula 1 as shown below, an amino resin, and a silicone resin having a functional group which can chemically bind to at least one of said hydroxyl-group-containing acrylic resin and said amino resin, wherein hydroxyl value of said hydroxyl-group-containing acrylic resin is 10 to 150 mg KOH/g; glass transition temperature of said hydroxy-group-containing acrylic resin is 20 to 100°C; and weight average molecular weight of said hydroxy-group-containing acrylic resin is 20,000 to 100,000;
[Formula 1] 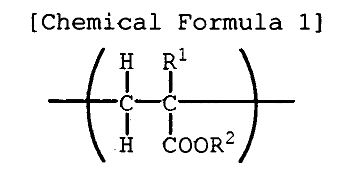 wherein, R¹ is hydrogen atom or methyl group, R² is hydroxyalkyl group having 1 to 20 carbon atoms or a substituent represented by the following Chemical Formula 2:
[Formula 2] 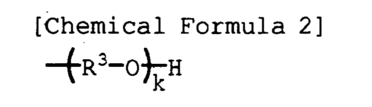 wherein, R³ is a linear or branched alkylene group having 1 to 10 carbon atoms, and k is a real number of 1 to 10.

2. The release agent composition according to claim 1, wherein, solid content of said hydroxy-group-containing acrylic resin is 20 to 90 parts by mass, solid content of said amino resin is 10 to 80 parts by mass, and solid content of said silicone resin is 1 to 20 parts by mass, based on the total solid content of said hydroxy-group-containing acrylic resin as 100 parts by mass.

3. The release agent composition according to claim 2, further comprising an alkyd resin as a solid content over 0 part by mass and 50 parts by mass or less, based on the total solid content of said hydroxy-group-containing acrylic resin as 100 parts by mass.

4. The release agent composition according to any one of claims 1 to 3, wherein said silicone resin is an organopolysiloxane in which 15 to 50% of the total organic groups bound to silicon atom are phenyl groups based on the total number of the organic groups bound to silicon atom as 100 %, and at least one of the rest of organic groups is an organic group containing a functional group having a reactivity to an amino resin.

5. A release material obtained by coating the release agent composition according to any one of claims 1 to 4 on the surface of a substrate.

## Patentansprüche

1. Trennmittelzusammensetzung, welche ein Hydroxygruppe-enthaltendes Acrylharz mit einer Grundeinheit, dargestellt durch die chemische Formel 1 wie unten gezeigt, ein Aminoharz und ein Siliconharz mit einer funktionellen Gruppe umfasst, welche an mindestens eines vom besagten Hydroxylgruppe-enthaltenden Acrylharz und besagten Aminoharz chemisch binden kann, wobei der Hydroxylwert des besagten Hydroxylgruppe-enthaltenden Acrylharzes 10 bis 150 mg KOH/g ist; die Glasübergangstemperatur des besagten Hydroxygruppe-enthaltenden Acrylharzes 20 bis 100°C ist; und die massegemittelte Molekülmasse des besagten Hydroxygruppe-enthaltenden Acrylharzes 20000 bis 100000 ist;
[Formel 1] 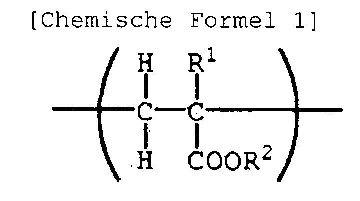 worin R¹ für Wasserstoffatom oder Methylgruppe steht; R² für Hydroxyalkylgruppe mit 1 bis 20 Kohlenstoffatomen oder einen Substituenten steht, dargestellt durch die folgende chemische Formel 2:
[Formel 2] 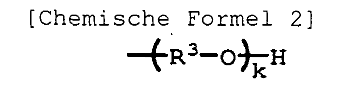 worin R³ eine lineare oder verzweigte Alkylengruppe mit 1 bis 10 Kohlenstoffatomen darstellt und k eine reelle Zahl von 1 bis 10 ist.

2. Trennmittelzusammensetzung gemäß Anspruch 1, worin der Feststoffgehalt von besagtem Hydroxygruppe-enthaltenden Acrylharz 20 bis 90 Massenteile ist, der Feststoffgehalt von besagtem Aminoharz 10 bis 80 Massenteile ist und der Feststoffgehalt von besagtem Siliconharz 1 bis 20 Massenteile ist, basierend auf dem Gesamtfeststoffgehalt von besagtem Hydroxygruppe-enthaltenden Acrylharz als 100 Massenteile.

3. Trennmittelzusammensetzung gemäß Anspruch 2, welche ferner ein Alkydharz als Feststoffgehalt über 0 Massenteile und 50 Massenteile oder weniger umfasst, basierend auf dem Gesamtfeststoffgehalt von besagtem Hydroxygruppe-enthaltenden Acrylharz als 100 Massenteile.

4. Trennmittelzusammensetzung gemäß einem von Ansprüchen 1 bis 3, worin besagtes Siliconharz ein Organopolysiloxan ist, worin 15 bis 50% der gesamten organischen Gruppen, gebunden an Siliconatom, Phenylgruppen sind, basierend auf der Gesamtzahl der organischen Gruppen, gebunden an Siliconatom, als 100%, und mindestens eine vom Rest der organischen Gruppen eine organische Gruppe ist, welche eine funktionelle Gruppe mit einer Reaktivität zu einem Aminoharz hat.

5. Trennmaterial, erhalten durch Beschichten der Trennmittelzusammensetzung gemäß einem von Ansprüchen 1 bis 4 auf die Oberfläche eines Substrats.

## Revendications

1. Composition d'agent antiadhésif comprenant une résine acrylique contenant des groupes hydroxy ayant un motif de répétition représenté par la formule chimique 1 telle que présentée ci-dessous, une résine amino, et une résine de silicone ayant un groupe fonctionnel qui peut chimiquement se lier à au moins une de ladite résine acrylique contenant des groupes hydroxyles et de ladite résine amino, dans laquelle l'indice d'hydroxyle de ladite résine acrylique contenant des groupes hydroxyles va de 10 à 150 mg KOH/g ; la température de transition vitreuse de ladite résine acrylique contenant des groupes hydroxy va de 20°C à 100°C ; et la masse moléculaire moyenne en masse de ladite résine acrylique contenant des groupes hydroxy va de 20 000 à 100 000 ;
[Formule 1] 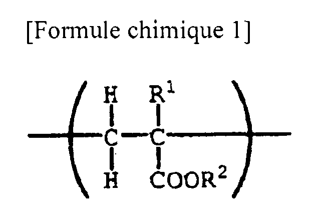 dans laquelle, R¹ représente un atome d'hydrogène ou un groupe méthyle, R² représente un groupe hydroxyalkyle possédant 1 à 20 atomes de carbone ou un substituant représenté par la formule chimique 2 suivante :
[Formule 2] 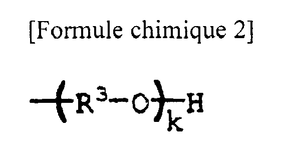 dans laquelle R³ représente un groupe alkylène linéaire ou ramifié ayant 1 à 10 atomes de carbone, et k représente un nombre réel de 1 à 10.

2. Composition d'agent antiadhésif selon la revendication 1, dans laquelle, la teneur en solides de ladite résine acrylique contenant des groupes hydroxy va de 20 à 90 parties en masse, la teneur en solides de ladite résine amino va de 10 à 80 parties en masse, et la teneur en solides de ladite résine de silicone va de 1 à 20 parties en masse, basées sur la teneur en solides totale de ladite résine acrylique contenant des groupes hydroxy pour 100 parties en masse.

3. Composition d'agent antiadhésif selon la revendication 2, comprenant de plus une résine alkyde pour une teneur en solides de plus de 0 partie en masse et de 50 parties en masse ou moins, basée sur la teneur en solides totale de ladite résine acrylique contenant des groupes hydroxy pour 100 parties en masse.

4. Composition d'agent antiadhésif selon l'une quelconque des revendications 1 à 3, dans laquelle ladite résine de silicone est un organopolysiloxane dans lequel 15 à 50 % des groupes organiques totaux liés à un atome de silicium sont des groupes phényle basés sur le nombre total des groupes organiques liés à un atome de silicium pour 100 %, et au moins l'un des groupes organiques restants est un groupe organique contenant un groupe fonctionnel ayant une réactivité à une résine amino.

5. Matériau antiadhésif obtenu en déposant la composition d'agent antiadhésif selon l'une quelconque des revendications 1 à 4 sur la surface d'un substrat.
